# EUROPEAN PATENT SPECIFICATION

(11) **EP 1 483 441 B1**
(45) Date of publication and mention of the grant of the patent: **15.11.2006**
(21) Application number: 01991635.2
(22) Date of filing: 19.12.2001
(51) Int. Cl.: D06M 15/564, D06M 13/02, D06M 13/224, D06M 15/227, D06M 13/358, C09D 175/04, C08G 18/70, C08G 18/38

(54) **AQUEOUS COMPOSITION FOR RENDERING FIBROUS SUBSTRATES WATER REPELLENT**
WÄSSRIGES HYDROPHOBIERMITTEL FÜR FASERHALTIGE SUBSTRATE
COMPOSITION AQUEUSE PERMETTANT DE RENDRE IMPERMEABLES DES SUBSTRATS FIBREUX

(43) Date of publication of application: 08.12.2004
(73) Proprietor: 3M Innovative Properties Company, St. Paul, MN 55133-3427 (US)
(72) Inventor: AUDENAERT, Frans A., B-9970 Kaprijke (BE); LENS, Hugo R., B-2530 Boechout (BE); ROLLY, Dominique G., B-9800 Deinze (BE)
(74) Representative: Voortmans, Gilbert J.L.
(86) International application number: PCT/US2001/051114
(87) International publication number: WO 2004/059073

(56) References cited:
- EP-A- 0 537 578
- WO-A-92/17636
- DE-A- 2 625 776
- US-A- 2 835 641
- US-A- 5 453 540

## Description

### Field of the invention

This invention relates to aqueous compositions for rendering fibrous substrates water repellent. In a particular aspect, this invention relates to such compositions that are substantially free of fluorochemical compounds.

### Background of the invention

Compositions for making substrates and in particular fibrous substrates such as textiles, water repellent have been long known in the art. Generally, the commercially available compositions to render textiles water repellent comprise a fluorochemical compound, i.e., a compound that comprises substantial amounts of fluorine. Such fluorochemical compounds can be simple low molecular weight compounds as well as oligomeric or polymeric compounds.

For example, US 3,480,579 discloses compositions that are based on a mixture of a hydrocarbon derivatised melamine and a fluorochemical compound to render, for example, textiles water and oil repellent. The compositions of US 3,480,579 may further contain a wax such as a paraffin wax. US 4,477,498 and US 4,014,857 each disclose melamines that have been derivatised with a fluorochemical group to render substrates oil and water repellent. WO 98/45345 discloses melamines that have been derivatised with hydrocarbon groups as well as fluorochemical groups. These compositions are taught for treating textiles and to render same oil and water repellent.

From US 4,834,764 and WO 99/14422 there are further known compositions for making textile oil and water repellent which are based on a blocked isocyanate component and a fluorochemical compound. Similarly, US 5,508,370 teaches blocked isocyanates that are self-emulsifying in water. These blocked isocyanates may be used to render substrates such as textiles water repellent and are generally taught for use in combination with fluorochemical compounds.

Thanks to the use of fluorochemical compounds in such compositions, excellent oil and water repellent properties can be imparted on a substrate. Unfortunately environmental concerns have recently been raised with respect to their use. Therefore, a need exists to find alternative compositions that are substantially free of fluorochemical compounds and that nevertheless still yield good water repellent properties on a substrate, in particular textile.

Although commercial water repellent compositions are generally based on one or more fluorochemical compound, there are also water repellent compositions known that are free of such compounds. For example, US 3,506,661 teaches hydrocarbon derivatised melamines to render textile water repellent. However, the water repellent properties that can be achieved with these compositions is poor.

Accordingly, there exists a need to find further compositions for rendering fibrous substrates water repellent and that are free or substantially free of fluorochemical compounds. Preferably such compositions can achieve a high level of water repellency, most preferably the same or similar water repellency performance as compositions that contain a fluorochemical compound.

### Summary of the invention

The present invention provides an aqueous composition as claimed in claim 1.

It has been found that these compositions when used for treating a fibrous substrate can achieve a high level of water repellency which in some instances approaches the water repellency properties that are generally associated with fluorochemical compositions. Further, the compositions generally showed good durability and launderability.

By the term "blocked aromatic polyisocyanate" is meant an aromatic polyisocyanate of which the isocyanate groups have been reacted with a blocking agent. Isocyanate blocking agents are compounds that upon reaction with an isocyanate group yield a group that is unreactive at room temperature with compounds that at room temperature normally react with an isocyanate but which group at elevated temperature reacts with isocyanate reactive compounds. Generally, at elevated temperature the blocking group will be released from the blocked aromatic polyisocyanate compound thereby generating the isocyanate group again which can then react with an isocyanate reactive group. Blocking agents and their mechanisms have been described in detail in "Blocked isocyanates III.: Part. A, Mechanisms and chemistry" by Douglas Wicks and Zeno W. Wicks Jr., Progress in Organic Coatings, 36 (1999), pp. 14-172.

The present invention also provides a method for treating a fibrous substrate with the compositions and to substrates treated with such compositions.

### Detailed Description of the Illustrative Embodiments Invention

The aqueous composition of the invention comprises a melamine that has been at least partially derivatised with an aliphatic hydrocarbon group that has at least 8 carbon atoms, preferably at least 12 carbons. Typically, the aliphatic hydrocarbon group will contain between 12 and 50 carbon atoms. The melamine may be derivatised in any of the known ways. For example, a methylolated melamine or a lower (C₁-C₄) alkoxy derivative thereof may be reacted with a hydrocarbon compound of the following formula:

Rₕ-(X¹)ₘ-Z¹H I

wherein :
Rₕ represents an aliphatic hydrocarbon group having at least 8 carbon atoms;
X¹ represents a divalent organic linking group;
Z¹H represents hydroxy, thiol or an acid group, such as, e.g., a carboxylic acid; and
m is 0 or 1.

Rₕ includes hydrocarbon groups having at least 8 carbon atoms and more preferably at least 12 carbon atoms. The hydrocarbon group is preferably saturated. Particularly preferred Rₕ-groups included unsubstituted linear or branched alkyl groups. Preferably such alkyl groups have from 8 to 30 carbon atoms. Rₕ-groups may also contain cycloaliphatic groups such as cyclohexyl groups or cyclohexylene groups.

Organic divalent linking group X¹ preferably contains from 1 to about 20 carbon atoms and may contain oxygen, nitrogen or sulfur-containing groups or a combination thereof. For example, the organic divalent linking group can be selected from the group consisting of arylene, aralkylene, sulfonyl, poly(alkyleneoxy), urethanylene, ureylene, carbonamidoalkylene or sulfonamidoalkylene groups.

The reaction of the methylolated melamine or alkoxy derivative thereof is generally carried out in the presence of an acid catalyst. Typically a strong acid catalyst such as p-toluene sulfonic acid, camphene sulfonic acid, amberlyst IR-120 and methane sulfonic acid are used as acid catalysts.

The melamine is at least partially derivatised with the hydrocarbon, preferably at least 20% of the methylol groups or lower alkoxy groups are converted. More preferably, at least 40 or 50% are converted. Thus, the melamine in accordance with a preferred embodiment of this invention may be a mixture of melamine compounds represented by the following formula: 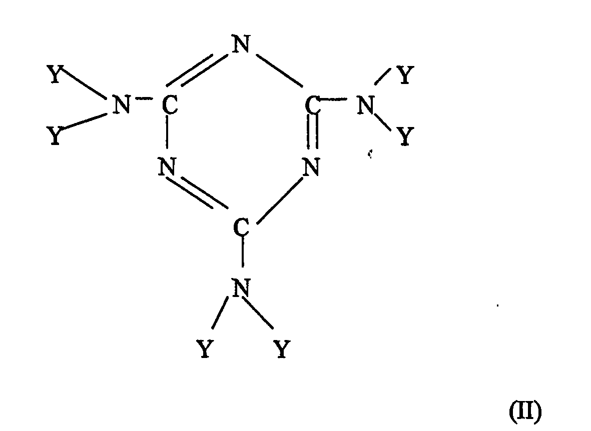 wherein the Y groups may be the same or different and each Y groups represents CH₂OH, CH₂OR with R being a C₁-C₄ alkyl or CH₂Z¹-(X¹)ₘ -Rₕ with Z¹-(X¹)ₘ -Rₕ having the meaning as defined above and wherein at least 20% and preferably at least 80% of the Y groups are CH₂Z¹-(X¹)ₘ -Rₕ.

A further component of the aqueous composition is a wax. Suitable waxes include mineral waxes, synthetic waxes, and natural waxes. Examples of natural waxes include vegetable waxes such as carnauba wax and candelilla wax, bees wax or waxes derived from animal sources. Examples of synthetic waxes include petroleum waxes such as paraffin waxes and microcrystalline or semimicrocrystalline waxes. Mineral waxes include montan waxes and peat waxes. Preferably, the wax will have a melting temperature of at least 35°C. A preferred wax for use in the composition is a paraffin wax.

Compositions are commercially available that include a mixture of the melamine component and a wax. Such commercially available mixtures include for example Cerol^{™} EWL available from Clariant and Freepel 1225 available from BF Goodrich and can be used in preparing the aqueous composition.

The aqueous composition further includes at least a reaction product of an aliphatic polyisocyanate and an organic compound having one or more groups capable of reacting with an isocyanate or a blocked isocyanate compound. The reaction product of the aliphatic polyisocyanate and organic compound should have free isocyanate groups and should further have a molecular weight of at least 350g/mol, preferably at least 450g/mol to assure that the reaction product will have a sufficiently low vapor pressure. The amount of free isocyanate groups is typically at least 5% by weight of the total weight of the reaction product, preferably at least 10% by weight. Suitable aliphatic isocyanates include diisocyanates, triisocyanates and mixtures thereof Examples include hexamethylenediisocyanate, 2,2,4-trimethyl-1,6-hexamethylenediisocyanate, and isophorone diisocyanate, dicyclohexylmethane-4,4'-diisocyanate and aliphatic triisocyanates such as 1,3,6-hexamethylenetriisocyanate, biuret of hexamethylene diisocyanate and trimer of hexamethylene diisocyanate.

The aliphatic polyisocyanate is reacted with an organic compound having one or more groups capable of reacting with an isocyanate. The organic compound is typically reacted with the aliphatic polyisocyanate in the presence of a catalyst such as an organic tin compound and under reaction conditions commonly employed. The amount of organic compound will be selected such so as to leave a desired amount of isocyanate groups unreacted. The resultant reaction mixture can be used as such to prepare the aqueous compositions of the invention and is generally free of any unreacted low molecular weight aliphatic polyisocyanate or the content thereof is preferably less than 1% by weight, more preferably less than 0.5% by weight. The organic compound preferably has one or two functional groups that are capable of reacting with an isocyanate group. Such functional groups include hydroxy, amino and thiol groups. Examples of organic compounds include alkane diols such as ethylene glycol, mono-alkanols having at least 6 carbon atoms, fatty ester diols, polyester diols, alkane diamines and dimer diols. According to a particularly preferred embodiment, the organic compound will include one or more water solubilising groups or groups capable of forming water solubilising groups so as to obtain a reaction product that is self-emulsifying in water. Suitable water solubilising groups include cationic, anionic and zwitter ionic groups as well as non-ionic water solubilising groups. Examples of ionic water solubilising groups include ammonium groups, phosphonium groups, sulfonium groups, carboxylates, sulfonates, phosphates, phosphonates or phosphinates. Examples of groups capable of forming a water solubilising group in water include groups that have the potential of being protonated in water such as amino groups, in particular tertiary amino groups. Particularly preferred organic compounds for reacting with the aliphatic polyisocyanate are those organic compounds that have only one or two functional groups capable of reacting with NCO-group and that further include a non-ionic water-solubilising group. Typical non-ionic water solubilising groups include polyoxyalkylene groups. Preferred polyoxyalkylene groups include those having 1 to 4 carbon atoms such as polyoxyethylene, polyoxypropylene, polyoxytetramethylene and copolymers thereof such as polymers having both oxyethylene and oxypropylene units. The polyoxyalkylene containing organic compound may include one or two functional groups such as hydroxy or amino groups. Examples of polyoxyalkylene containing compounds include mono alkyl ethers of polyglycols such as e.g. mono methyl or ethyl ether of polyethyleneglycol, hydroxy terminated methyl or ethyl ether of a random or block copolymer of ethyleneoxide and propyleneoxide, amino terminated methyl or ethyl ether of polyethyleneoxide, polyethylene glycol, polypropylene glycol, a hydroxy terminated copolymer (including a block copolymer) of ethyleneoxide and propylene oxide, a diamino terminated poly(alkylene oxide) such as Jeffamines^{™} ED, Jeffamine^{™} EDR-148 and poly(oxyalkylene) thiols.

Commercially available reaction products of an aliphatic polyisocyanate and an organic compound that are useful herein include Baygard^{™} VP SP 23012, Rucoguard^{™} EPF 1421 and Tubicoat^{™} Fix ICB.

Alternatively or additionally to the reaction product set forth above, the composition may include as the polyisocyanate component a blocked aromatic polyisocyanate. The blocked aromatic polyisocyanate is generally a blocked aromatic di- or triisocyanate or a mixture thereof and can be obtained by reacting the aromatic polyisocyanate with a blocking agent that has at least one functional group capable of reacting with an isocyanate group. Preferred blocked aromatic polyisocyanates are those that at a temperature of less than 150°C are capable of reacting with an isocyanate reactive group, preferably through deblocking of the blocking agent at elevated temperature. Preferred blocking agents include arylalcohols such as phenols, lactams such as ε-caprolactam, δ-valerolactam, γ-butyrolactam, oximes such as formaldoxime, acetaldoxime, methyl ethyl ketone oxime, cyclohexanone oxime, acetophenone oxime, benzophenone oxime, 2-butanone oxime or diethyl glyoxime. Further suitable blocking agents include bisulfite and triazoles.

The blocked aromatic polyisocyanate preferably also has a molecular weight of at least 350g/mol. According to a particular embodiment of the invention, the blocked aromatic polyisocyanate may comprise the condensation product of an aromatic polyisocyanate, for example a di- or triisocyanate, a blocking agent and an organic compound other than the blocking agent and having one or more isocyanate reactive groups such as a hydroxy, amino or thiol group. Examples of such organic compounds include those described above. Particularly preferred are blocked aromatic polyisocyanates that have a self-emulsifying capability in water. Accordingly, to obtain such polyisocyanate compounds, an aromatic polyisocyanate, a blocking agent and an organic compound having a water solubilising group or a group capable of forming a water solubilising group in water, are reacted with each other under conditions commonly employed in reacting isocyanate components. Suitable organic compounds including such a water solubilising group or a group potentially forming a water solubilising group have been described above.

Examples of aromatic polyisocyanates for preparing the blocked aromatic polyisocyanates include di- or triisocyanates as well as mixtures thereof. Specific examples are aromatic diisocyanates such as 4,4'-methylenediphenylenediisocyanate, 4,6-di-(trifluoromethyl)-1,3-benzene diisocyanate, 2,4-toluenediisocyanate, 2,6-toluene diisocyanate, o, m, and p-xylylene diisocyanate, 4,4'-diisocyanatodiphenylether, 3,3'-dichloro-4,4'-diisocyanatodiphenylmethane, 4,5'-diphenyldiisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3-naphthylene diisocyanate, and 1,8-dinitro-2,7-naphthylene diisocyanate and aromatic tri-isocyanates such as polymethylenepolyphenylisocyanate.

Commercially available blocked aromatic polyisocyanates include Baygard^{™} EDW available from Bayer Corp. and Hydrophobol^{™} XAN available from Ciba-Geigy

The aqueous compositions can be prepared by dispersing or emulsifying the melamine, wax and polyisocyanate component in water optionally with the aid of an emulsifier. When the polyisocyanate component includes the reaction production of an aliphatic polyisocyanate and a organic compound, the polyisocyanate component will generally only be added to the aqueous treating composition shortly before treatment of the fibrous substrate because the free isocyanate groups contained in this compound will slowly react with water and thus disappear so that they would no longer be available for reaction with groups on the fibrous substrate. Nevertheless, even in case the polyisocyanate component includes such a reaction product with free isocyanate groups, it has been found that the aqueous composition can still be effectively used for 1 hour to about 12 hours. If the polyisocyanate only includes the blocked aromatic polyisocyanate, the aqueous composition will have a substantially longer stability generally in the order of several weeks or months.

The aqueous treating composition will generally contain the melamine in an amount of 0.2% by weight to 15% by weight, preferably from 0.5% by weight to 10% by weight. The wax is generally present in an amount between 0.2% by weight and 15% by weight, preferably between 0.5% by weight and 10% by weight and polyisocyanate component is present generally present in an amount between 0.01% by weight and 5% by weight, preferably between 0.05% by weight and 2% by weight. The aqueous treating compositions may contain further additives commonly employed in treating compositions for textile. However, the aqueous composition of the present invention is free of fluorochemical compounds or will generally contain them in amounts less then 0.05% by weight, more preferably in amounts less than 0.01% by weight.

Fibrous substrates that can be treated with the present invention include in particular textile. The fibrous substrate may be based on synthetic fibers, e.g., polyester fibers or natural fibers, e.g., cellulose fibers as well as mixtures thereof. When the fibrous substrate is essentially based on polyester fibers, it is preferred to treat such substrates with an aqueous composition that includes the reaction product of an aliphatic polyisocyanate and an organic compound.

In order to render the fibrous substrate water repellent, an effective amount of the aqueous composition is applied to the substrate. The amount of the aqueous composition applied to a substrate is chosen so that a sufficiently high level of the desired properties are imparted to the substrate surface. This amount will usually be such that 0.3% to 5% by weight, preferably 1% to 3% by weight, based on the weight of the substrate, of the composition is present on the treated substrate. The amount which is sufficient to impart desired properties can be determined empirically and can be adjusted as necessary or desired.

In order to affect treatment of a textile substrate, the substrate can be immersed in a diluted emulsion. The saturated substrate can then be run through a padder/roller to remove excess aqueous composition, dried and cured in an oven at a temperature and for a time sufficient to provide a cured treated substrate. This curing process is typically carried out at temperatures between about 110°C and about 190°C depending on the particular system or application method used. In general, a temperature of about 120°C to 170°C, in particular of about 150°C to about 170°C for a period of about 20 seconds to 10 minutes, preferably 30 seconds to 5 minutes, is suitable.

The invention is further illustrated by reference to the following non-limiting examples.

### EXAMPLES

### Formulation and Treatment Procedure

Aqueous treatment baths were formulated containing a defined amount of the melamine, wax and polyisocyanate components. Treatments were applied to the test substrates by padding to provide a concentration of 0.5 to 3% (based on fabric weight and indicated as SOF (solids on fabric)) and drying and curing the samples at 160°C during 2 minutes. Substrates used for the evaluation of treatments of this invention were commercially available and are listed below : 100% cotton (khaki) : style no. 1511.1, available from Utexbel N.V., Ronse, Belgium. PES/CO 65/35 (white) : style no. 2681, available from Utexbel N.V., Ronse, Belgium 100% PESµ (brown) : style no. 6145, available from Sofinal, Belgium.

After drying, the substrates were tested for their water repellency properties. Respective data of water repellency shown in the Examples and Comparative Examples were based on the following methods of measurement and evaluation criteria :

### Spray Test (SR)

The spray rating of a treated substrate is a value indicative of the dynamic repellency of the treated substrate to water that impinges on the treated substrate. The repellency was measured by Standard Test Number 22, published in the 1985 Technical Manual and Yearbook of the American Association of Textile Chemists and Colorists (AATCC), and was expressed in terms of 'spray rating' of the tested substrate. The spray rating was obtained by spraying 250 ml water on the substrate from a height of 15 cm. The wetting pattern was visually rated : using a 0 to 100 scale, where 0 meant complete wetting and 100 meant no wetting at all.

### Bundesmann Test

The impregnating effect of rain on treated substrates was determined using the Bundesmann Test Method (DIN53888). In this test, the treated substrates were subjected to a simulated rainfall, while the back of the substrate was being rubbed. The appearance of the upper exposed surface was checked visually after 1, 5 and 10 minutes and was given a rating between 1 (complete surface wetting) and 5 (no water remained on the surface). A Bundesmann test was only done on substrates with an initial spray rating of 100.

### Laundering Procedure

The procedure set forth below was used to prepare treated substrate samples designated in the examples below as "5 Home Launderings Ironing (5HL IR)".

A 230 g sample of generally square, 400 cm² to about 900 cm² sheets of treated substrate was placed in a washing machine along with a ballast sample (1.9 kg of 8 oz fabric in the form of generally square, hemmed 8100 cm² sheets). A commercial detergent ("Sapton", available from Henkel, Germany, 46 g) was added and the washer was filled to high water level with hot water (40°C +- 3°C). The substrate and ballast load were washed five times using a 12-minute normal wash cycle followed by five rinse cycles and centrifuging. The samples were not dried between repeat cycles. The substrates were hung on a supporting means and dried at room temperature (about 20°C) during 24 hours. After drying, the samples were pressed using an iron at the temperature set for the fiber of the substrate. The laundering procedure was followed by performance tests such as Spray test (SR).

### Abbreviations

The following abbreviations and trade names were used in the Examples and Comparative Examples:
IN SR: initial spray rating
PESµ : polyester microfiber
PES/CO: polyester / cotton
Freepel^{™} 1225 : melamine / paraffin emulsion, available from BF Goodrich
Repearl^{™} MF : blocked aromatic polyisocyanate, available from Mitsubishi
Cerol^{™} EWL : melamine / paraffin emulsion, available from Clariant
Baygard^{™} EDW : anionic blocked aromatic polyisocyanate dispersion, available from Bayer
Baygard^{™} VP SP23012 : aliphatic isocyanate, available from Bayer
Tubicoat^{™} Fix ICB : aliphatic isocyanate, available from CHT
Rucoguard^{™} EPF1421 : aliphatic isocyanate, available from Rudolf Co GmBH
MPEG 350 : poly(ethyleneglycol)monomethyl ether, with molecular weight 350, available from Aldrich
DBTDL : dibutyltin dilaurate
DESN : Desmodur^{™} N100 : aliphatic polyisocyanate, available from Bayer
PMAc : methoxypropanol acetate, available from Merck
HMMM : hexamethoxymethylmelamine, commercially available from Dyno Cyanamid under the trade name Cymel^{™} 303
DMAE : dimethylaminoethanol available from Merck
Arquad^{™} 2HT/75 : dimethyl dihydrogenated tallow ammonium chloride, available from AKZO
Tween^{™} 81 : polyoxyethylene (5) sorbitan monooleate, available from Uniqema All parts, ratios, percentages etc. in the following examples are by weight unless otherwise noted.

### Synthesis of aliphatic isocyanates

### 1. Synthesis of aliphatic isocyanate DESN/MPEG 350 1/0.25 (molar ratio)

A 500 ml 3-necked reaction flask, equipped with a mechanical stirrer, a temperature control, dropping funnel, condenser and nitrogen in- and outlet was charged with 57.3 g Desmodur^{™} N100 and 19 g methoxypropanol acetate. 0.017 g DBTDL was added and the temperature was slowly raised to 70°C. 8.75 g MPEG 350 was added via the addition funnel, as well as 25 g PMAc. The reaction was run during 16 hours at 70°C. A clear, viscous, 60% solution was obtained which was used in the treatment baths.

### 2. Synthesis of aliphatic isocyanates DESN/DMAE 1/0.25 (molar ratio) and DESN/DMAE 1/0.5 (molar ratio)

Following the same method, aliphatic isocyanates DESN/DMAE 1/0.25 and DES/DMAE 1/0.5 were made, except that no DBTDL was added and the reaction was run at 70% solids at a temperature of 70°C during 3 hours.

### Synthesis of melamine derivative HMMM/stearylalcohol (molar ratio 1/4)

A 500 ml 3-necked reaction flask, equipped with a mechanical stirrer, a thermometer, a nitrogen inlet, a Dean Stark condenser and a heating mantle, was charged with 108 g stearylalcohol and 39 g HMMM. The reaction mixture was stirred and heated to 80°C under nitrogen flow until the reaction mixture became clear. Then 0.294 g p-toluene sulfonic acid catalyst was added. The reaction was run at 95°C during 2.5 hours under nitrogen flow, while methanol was distilled off in the Dean Stark condenser. The reaction was then run at 140°C during another 2.5 hours. After cooling the reaction mixture to 100°C, 220.5 g ethylacetate was added via a dropping funnel, resulting in a 40% melamine solution in ethylacetate. To 60 g of this solution were added 0.96 g of a 3% solution of Arquad 2HT/75 in water. The mixture was heated to 65°C and added to 96 g deionized water, preheated to 65°C, whilst stirring. The so formed pre-emulsion was then emulsified by immersion of an ultrasound probe (Branson 450-D Sonifier) for 6 minutes (cycle 10" run - 5" stop at 50-60°C). The ethylacetate was distilled off with a rotary evaporator at 55°, using waterjet vacuum. A stable milky emulsion of about 20% solids was obtained.

### Emulsification of paraffin wax

20 g Paraffin (solidification point 52-54°C, available from Merck) was mixed with 80 g deionised water. 0.4 g Tween^{™} 81 and 0.8 g Arquad^{™} 2HT/75 (75%) were added. The mixture was heated to 60-65°C while stirring. This pre-emulsion was emulsified by immersion of an ultrasound probe (Branson 450-D Sonifier) for 4 minutes (cycle 10" run - 5" stop at 50-60°C). A stable milky emulsion of about 20% solids was obtained.

### Examples 1 to 6 and Comparative Examples C-1 to C-6

In Examples 1 to 6, cotton fabric was treated with an aqueous mixture of melamine, paraffin wax and a blocked isocyanate, in amounts as given in Table 1. Comparative Examples C-1 to C-6 were made in the same way, but without the addition of a blocked isocyanate. The samples were treated in a pad application so as to give a concentration on fabric (% SOF) as indicated in Table 1. After treatment the fabrics were dried at 160°C for 2 minutes. Initial spray rating and Bundesmann test results were recorded. After laundering, according to the general procedure, the samples were tested for spray rating. The results are given in Table 1.

**Table 1 : Water repellency of cotton, treated with melamine, wax and blocked isocyanate**

| Ex No | Composition (% SOF) | IN SR | Bundesmann | | | 5HL IR SR |
|---|---|---|---|---|---|---|
| | | | 1' | 5' | 10' | |
| 1 | Freepel^{™} 1225 (0.5) + Repearl^{™} MF (0.16) | 100 | 2 | 2 | 1 | 0 |
| C-1 | Freepel^{™} 1225 (0.5) | 90 | | | | 0 |
| 2 | Freepel^{™} 1225 (1) + Repearl^{™} MF (0.16) | 100 | 3 | 3 | 2 | 0 |
| C-2 | Freepel^{™} 1225 (1) | 100 | 1 | 1 | 1 | 0 |
| 3 | Freepel^{™} 1225 (2) + Repearl^{™} MF (0.16) | 100 | 3 | 3 | 2 | 70 |
| C-3 | Freepel^{™} 1225 (2) | 100 | 3 | 1 | 1 | 0 |
| 4 | Cerol^{™} EWL (0.5) + Baygard^{™} EDW (0.15) | 50 | | | | 0 |
| C-4 | Cerol^{™} EWL (0.5) | 0 | | | | 0 |
| 5 | Cerol^{™} EWL (1) + Baygard^{™} EDW (0.15) | 100 | 2 | 1 | 1 | 80 |
| C-5 | Cerol^{™} EWL (1) | 80 | | | | 0 |
| 6 | Cerol^{™} EWL (2) + Baygard^{™} EDW (0.15) | 100 | 2 | 2 | 1 | 80 |
| C-6 | Cerol^{™} EWL (2) | 90 | | | | 0 |

The results indicated that substrates with high water repellency could be obtained when they were treated with an aqueous mixture of melamine, wax and blocked isocyanate. Especially initial dynamic water repellency was improved as compared to samples which were only treated with melamine and wax. Also an improvement in durability was noticed, especially at the high add-on levels.

### Examples 7 to 12 and Comparative Examples C-7 to C-12

In Examples 7 to 12, cotton fabric was treated with an aqueous mixture of melamine, paraffin wax and an aliphatic isocyanate, in amounts as given in Table 2. Comparative Examples C-7 to C-12 were made in the same way, but without the addition of an aliphatic isocyanate. The samples were treated in a pad application so as to give a concentration on fabric (% SOF) as indicated in Table 2. After treatment the fabrics were dried at 160°C for 2 minutes. Initial spray rating and Bundesmann test results were recorded. After laundering, according to the general procedure, the samples were tested for spray rating. The results are given in Table 2.

**Table 2 : Water repellency of cotton, treated with melamine, wax and aliphatic isocyanate**

| Ex No | Composition (% SOF) | IN SR | Bundesmann | | | 5HL IR SR |
|---|---|---|---|---|---|---|
| | | | 1' | 5' | 10' | |
| 7 | Freepel^{™} 1225 (0.5) + Tubicoat^{™} Fix ICB (0.13) | 100 | 3 | 1 | 1 | 95 |
| C-7 | Freepel^{™} 1225 (0.5) | 90 | | | | 0 |
| 8 | Freepel^{™} 1225 (1) + Tubicoat^{™} Fix ICB (0.13) | 100 | 1 | 1 | 1 | 85 |
| C-8 | Freepel^{™} 1225 (1) | 100 | 1 | 1 | 1 | 0 |
| 9 | Freepel^{™} 1225 (2) + Tubicoat^{™} Fix ICB (0.13) | 100 | 4 | 3 | 3 | 80 |
| C-9 | Freepel^{™} 1225 (2) | 100 | 3 | 1 | 1 | 0 |
| 10 | Cerol^{™} EWL (0.5) + Tubicoat^{™} Fix ICB (0.13) | 90 | | | | 80 |
| C-10 | Cerol^{™} EWL (0.5) | 0 | | | | 0 |
| 11 | Cerol^{™} EWL (1) + Tubicoat^{™} Fix ICB (0.13) | 100 | 3 | 3 | 3 | 80 |
| C-11 | Cerol^{™} EWL (1) | 80 | | | | 0 |
| 12 | Cerol^{™} EWL (2) + Tubicoat^{™} Fix ICB (0.13) | 100 | 3 | 3 | 2 | 90 |
| C-12 | Cerol^{™} EWL (2) | 90 | | | | 0 |

The results indicate that substrates, treated with a mixture of melamine, wax and aliphatic isocyanate showed a considerable improvement of initial dynamic water repellency as well as durability as compared to samples treated with melamine and wax only.

### Examples 13 to 18 and Comparative Examples C-13 to C-18

In Examples 13 to 18, and Comparative Examples C-13 to C-18, the same type of experiment as for Examples 1 to 12 and Comparative Examples C-1 to C-12 was repeated with white polyester/cotton fabric. The composition of the treatment as well as the results of water repellency are given in Table 3.

**Table 3 : Water repellency of PES/CO, treated with melamine, wax and blocked isocyanate**

| Ex No | Composition (% SOF) | IN SR | Bundesmann | | | 5HL IR SR |
|---|---|---|---|---|---|---|
| | | | 1' | 5' | 10' | |
| 13 | Freepel^{™} 1225 (0.5) + Repearl^{™} MF (0.16) | 100 | 2 | 1 | 1 | 80 |
| C-13 | Freepel^{™} 1225 (0.5) | 90 | | | | 50 |
| 14 | Freepel^{™} 1225 (1) + Repearl^{™} MF (0.16) | 100 | 4 | 2 | 2 | 90 |
| C-14 | Freepel^{™} 1225 (1) | 100 | 2 | 1 | 1 | 50 |
| 15 | Freepel^{™} 1225 (2) + Repearl^{™} MF (0.16) | 100 | 4 | 2 | 2 | 90 |
| C-15 | Freepel^{™} 1225 (2) | 100 | 3 | 1 | 1 | 50 |
| 16 | Cerol^{™} EWL (0.5) + Baygard^{™} EDW (0.15) | 70 | | | | 0 |
| C-16 | Cerol^{™} EWL (0.5) | 50 | | | | 0 |
| 17 | Cerol^{™} EWL (1) + Baygard^{™} EDW (0.15) | 100 | 4 | 3 | 3 | 90 |
| C-17 | Cerol^{™} EWL (1) | 100 | 1 | 1 | 1 | 50 |
| 18 | Cerol^{™} EWL (2) + Baygard^{™} EDW (0.15) | 100 | 4 | 3 | 3 | 90 |
| C-18 | Cerol^{™} EWL (2) | 100 | 3 | 1 | 1 | 50 |

Also for polyester/cotton fabrics, it was noticed that the treated substrates had higher initial dynamic water repellency as well as higher durability as compared to substrates which were only treated with melamine and wax.

### Examples 19 to 24 and Comparative Examples C-19 to C-24

In Examples 19 to 24 and Comparative Examples C-19 to C-24, the same type of experiment as for Examples 7 to 12 and Comparative Examples C-7 to C-12 was repeated with white polyester/cotton fabric. The composition of the treatment as well as the results of water repellency are given in Table 4.

**Table 4 : Water repellency of PES/CO, treated with melamine, wax and aliphatic isocyanate**

| Ex No | Composition (% SOF) | IN SR | Bundesmann | | | 5HL IR SR |
|---|---|---|---|---|---|---|
| | | | 1' | 5' | 10' | |
| 19 | Freepel^{™} 1225 (0.5) + Tubicoat^{™} Fix ICB (0.13) | 100 | 4 | 3 | 2 | 90 |
| C-19 | Freepel^{™} 1225 (0.5) | 90 | | | | 50 |
| 20 | Freepel^{™} 1225 (1) + Tubicoat^{™} Fix ICB (0.13) | 100 | 3 | 3 | 2 | 90 |
| C-20 | Freepel^{™} 1225 (1) | 100 | 2 | 1 | 1 | 50 |
| 21 | Freepel^{™} 1225 (2) + Tubicoat^{™} Fix ICB (0.13) | 100 | 4 | 4 | 3 | 90 |
| C-21 | Freepel^{™} 1225 (2) | 100 | 3 | 1 | 1 | 50 |
| 22 | Cerol^{™} EWL (0.5) + Tubicoat^{™} Fix ICB (0.13) | 100 | 3 | 1 | 1 | 80 |
| C-22 | Cerol^{™} EWL (0.5) | 50 | | | | 0 |
| 23 | Cerol^{™} EWL (1) + Tubicoat^{™} Fix ICB (0.13) | 100 | 4 | 4 | 4 | 100 |
| C-23 | Cerol^{™} EWL (1) | 100 | 1 | 1 | 1 | 50 |
| 24 | Cerol^{™} EWL (2) + Tubicoat^{™} Fix ICB (0.13) | 100 | 4 | 4 | 4 | 100 |
| C-24 | Cerol^{™} EWL (2) | 100 | 3 | 1 | 1 | 50 |

The influence of the addition of an aliphatic isocyanate to the melamine and wax mixture was clear in this set of experiments. Substrates with very high dynamic water repellency (very low % ABS) and high durability (SR 100 after 5 home launderings) were obtained. The improvement was significant even at low add-on levels.

### Examples 25 to 27 and Comparative Example C-25

In Examples 25 to 27, aqueous mixtures of melamine, wax and various aliphatic isocyanates as given in Table 5, were made. The mixtures were used to treat polyester/cotton fabric according to the general method as described above. Comparative Example C-25 was made by using an aqueous mixture of melamine and wax alone. The composition of the samples and the water repellency properties of the substrates treated therewith are given in Table 5.

**Table 5 : Water repellency of PES/CO, treated with melamine, wax and aliphatic isocyanate**

| Ex No | Composition (% SOF) | IN SR | Bundesmann | | | 5HL IR SR |
|---|---|---|---|---|---|---|
| | | | 1' | 5' | 10' | |
| 25 | Freepel^{™} 1225 (1) + Tubicoat^{™} Fix ICB (0.13) | 100 | 3 | 2 | 2 | 80 |
| 26 | Freepel^{™} 1225 (1) + Baygard^{™} VP SP 23012 (0.16) | 100 | 4 | 3 | 2 | 100 |
| 27 | Freepel^{™} 1225 (1) + Rucoguard^{™} EPF 1421 (0.13) | 100 | 4 | 3 | 3 | 100 |
| C-25 | Freepel^{™} 1225 (1) | 100 | 2 | 1 | 1 | 50 |

The results indicated that the addition of various aliphatic isocyanates to the melamine and wax mixtures significantly increased the water repellency and the durability properties of the PES/CO substrates treated therewith. High spray rating after laundering were further noticed.

### Examples 28 to 32 and Comparative Examples C-26 to C-30

In Examples 28 to 32, polyester microfiber was treated with an aqueous mixture of melamine, paraffin wax and an aliphatic isocyanate, in amounts as given in Table 6. Comparative Examples C-26 to C-30 were made in the same way, but without the addition of an aliphatic isocyanate. The samples were treated in a pad application according to the general method. The results of initial spray rating, Bundesmann test and spray rating after laundering are given in Table 6.

**Table 6 : Water repellency of PESµ, treated with melamine, wax and aliphatic isocyanate**

| Ex No | Composition (% SOF) | IN SR | Bundesmann | | | 5HL IR SR |
|---|---|---|---|---|---|---|
| | | | 1' | 5' | 10' | |
| 28 | Freepel^{™} 1225 (0.5) + Tubicoat^{™} Fix ICB (0.13) | 90 | | | | 80 |
| C-26 | Freepel^{™} 1225 (0.5) | 90 | | | | 50 |
| 29 | Freepel^{™} 1225 (1) + Tubicoat^{™} Fix ICB (0.13) | 100 | 2 | 2 | 2 | 80 |
| C-27 | Freepel^{™} 1225 (1) | 100 | 2 | 2 | 2 | 70 |
| 30 | Freepel^{™} 1225 (2) + Tubicoat^{™} Fix ICB (0.13) | 100 | 3 | 3 | 3 | 90 |
| C-28 | Freepel^{™} 1225 (2) | 100 | 2 | 2 | 2 | 70 |
| 31 | Cerol^{™} EWL (1) + Tubicoat^{™} Fix ICB (0.13) | 80 | | | | 70 |
| C-29 | Cerol^{™} EWL (1) | 70 | | | | 50 |
| 32 | Cerol^{™} EWL (2) + Tubicoat^{™} Fix ICB (0.13) | 100 | 4 | 3 | 2 | 80 |
| C-30 | Cerol^{™} EWL (2) | 80 | | | | 70 |

As can be seen from the table, a durability improvement is obtained for the compositions according to the invention.

### Examples 33 to 40 and Comparative Examples C-31 and C-32

Examples 33 to 38 aqueous treatment baths were prepared by mixing Freepel^{™} 1225 with aliphatic isocyanates as indicated in Table 7. In order to make stable treatment baths for Examples 35, 36, 39 and 40, 2g/liter of a 60% solution of acetic acid was added to the Freepel^{™} 1225 before the addition of aliphatic isocyanate. Cotton or PES/CO substrates were treated by pad application so as to give a concentration of 1.85 % SOF Freepel^{™} 1225 and 0.15% SOF isocyanate. Comparative Examples C-31 and C-32 were made with aqueous solutions of Freepel^{™} 1225 alone, without the addition of an aliphatic isocyanate and at a concentration of 2% SOF. The treated substrates were cured according to the general method. The results of initial spray rating, Bundesmann test and spray rating after laundering are given in Table 7.

**Table 7 : Water repellency of substrates treated with Freepel^{™} 1225 and aliphatic isocyanate**

| Ex No | Aliphatic isocyanate | IN SR | Bundesmann | | | 5HL IR SR |
|---|---|---|---|---|---|---|
| | | | 1' | 5' | 10' | |
| Substrate : Cotton | | | | | | |
| 33 | Tubicoat^{™} Fix ICB | 100 | 4 | 4 | 3 | 90 |
| 34 | DESN/MPEG 3501/0.25 | 100 | 4 | 4 | 3 | 90 |
| 35 | DESN/DMAE 1/0.25 | 100 | 4 | 4 | 3 | 90 |
| 36 | DESN/DMAE 1/0.5 | 100 | 4 | 4 | 3 | 80 |
| C-31 | / | 100 | 3 | 2 | 1 | 50 |

| Substrate : PES/CO | | | | | | |
|---|---|---|---|---|---|---|
| 37 | Tubicoat^{™} Fix ICB | 100 | 3 | 2 | 2 | 80 |
| 38 | DESN/MPEG 350 1/0.25 | 100 | 3 | 2 | 2 | 80 |
| 39 | DESN/DMAE 1/0.25 | 100 | 4 | 3 | 2 | 90 |
| 40 | DESN/DMAE 1/0.5 | 100 | 4 | 3 | 2 | 90 |
| C-32 | / | 100 | 3 | 2 | 2 | 50 |

The results indicated that substrates treated with a combination of Freepel^{™} 1225 with different aliphatic isocyanates showed higher dynamic water repellency as well as better durability, compared to substrates treated with Freepel^{™} 1225 alone. The effect was more pronounced with cotton substrates.

### Examples 41 to 42 and Comparative Examples C-33 and C-36

In Examples 41 and 42 cotton and PES/CO were treated with an aqueous mixture of melamine derivative HMMM/ 4 stearylalcohol (1/4), aliphatic isocyanate DESN/MPEG 350 (1/0.25) and paraffin wax in amounts as given in Table 8. Comparative Examples C-33 to C-36 were made by treating the substrates with an aqueous mixture of melamine alone or a mixture of melamine and the aliphatic isocyanate without the paraffin wax. The treated substrated were cured at 160°C during 2 minutes. The results of spray test are given in Table 8.

**Table 8 : Spray test of substrates treated with aqueous melamine mixtures**

| Ex No | % SOF Melamine | % SOF DESN/MPEG 350 | % SOF Paraffin | Substrate | IN SR |
|---|---|---|---|---|---|
| 41 | 0.92 | 0.15 | 0.92 | PES/CO | 80 |
| C-33 | 1.85 | 0.15 | / | PES/CO | 60 |
| C-34 | 2 | / | / | PES/CO | 0 |
| 42 | 0.92 | 0.15 | 0.92 | Cotton | 80 |
| C-35 | 1.85 | 0.15 | / | Cotton | 70 |
| C-36 | 2 | / | / | Cotton | 50 |

A substantial increase in initial water repellency was observed when substrates were treated with a mixture of melamine and aliphatic isocyanate, compared to substrates treated with melamine alone. The spray rating can be further increased by using paraffin wax.

## Claims

1. An aqueous composition comprising:
(a) a melamine that is at least partially derivatised with an aliphatic hydrocarbon group having at least 8 carbon atoms;
(b) a wax; and
(c) at least one component selected from the group consisting of: (i) a reaction product of an aliphatic polyisocianate and an organic compound having one or more groups capable of reacting with an isocyanate, said reaction product having free isocyanate groups and having a molecular weight of at least 350 g/mol and (ii) a blocked aromatic polyisocyanate;
and wherein the composition is substantially free of fluorochemical compounds.

2. An aqueous composition according to claim 1 wherein said blocked aromatic polyisocyanate comprises a condensation product of aromatic polyisocyanate, an isocyanate blocking agent and an organic compound other than said isocyanate blocking agent that has one or more functional groups capable of reacting with an isocyanate.

3. An aqueous composition according to claim 2 wherein said isocyanate blocking agent is selected from the group consisting to aryl alcohols and C₂ to C₈ alkanone oximes.

4. An aqueous composition according to either of claim 2 or 3 wherein said organic compound has one or two functional groups capable of reacting with an isocyanate and wherein said functional groups are selected from a hydroxy group, an amino group and a thiol group.

5. An aqueous composition according to claim 4 wherein said organic compound comprises a water solubilising group selected from the group consisting of polyoxyalkylene groups, groups capable of forming an ionic group in an aqueous medium and ionic groups.

6. An aqueous composition according to claim 1 wherein said reaction product is the reaction product of an aliphatic polyisocyanate and an organic compound having one or two functional groups selected from the group consisting of a hydroxy group, an amino group and a thiol group.

7. An aqueous composition according to claim 6 wherein said organic compound comprises a water solubilising group selected from the group consisting of polyoxyalkylene groups, groups capable of forming an ionic group in an aqueous medium and ionic groups.

8. An aqueous composition according to claim 1 wherein component (a) is present in an amount between 0.5% by weight and 10% by weight, component (b) is present in an amount between 0.5% by weight and 10% by weight and component (c) is present in an amount between 0.05% by weight and 2% by weight.

9. An aqueous composition according in claim 1 further comprising an emulsifier.

10. A method of treating a fibrous substrate comprising the step of applying a composition according to claim 1 to a fibrous substrate.

11. A method according to claim 10 wherein said fibrous substrate comprises natural fibers.

12. A method according to either to claim 10 or 11 wherein said fibrous substrate is textile.

13. A method according to any of claims 10 to 12 wherein said fibrous substrate is subjected to a heat treatment between 110 and 190°C to effect curing of said composition.

14. A method according to any of claims 10 to 13 wherein said composition is applied in amount so as to yield an amount of solids on said fibrous substrate of a 0.3 to 5 % by weight based on the weight of said fibrous substrate.

15. A fibrous substrate having been treated with a composition according to claim 1.

16. A fibrous substrate according to claim 15 wherein said fibrous substrate comprises natural fibers.

17. A fibrous substrate according to claim 15 wherein said fibrous substrate is textile.

## Patentansprüche

1. Wässrige Zusammensetzung, umfassend
(a) ein Melamin, das mindestens teilweise mit einer aliphatischen Kohlenwasserstoffgruppe mit mindestens 8 Kohlenstoffatomen derivatisiert ist,
(b) ein Wachs und
(c) mindestens eine Komponente, die aus der Gruppe ausgewählt ist, die aus (i) einem Reaktionsprodukt eines aliphatischen Polyisocyanats und einer organischen Verbindung mit einer oder mehreren Gruppen, die fähig sind, mit einem Isocyanat zu reagieren, wobei das Reaktionsprodukt freie Isocyanatgruppen und ein Molekulargewicht von mindestens 350 g/mol aufweist, und (ii) einem blockierten aromatischen Polyisocyanat besteht,
und wobei die Zusammensetzung im Wesentlichen frei von fluorchemischen Verbindungen ist.

2. Wässrige Zusammensetzung nach Anspruch 1, wobei das blockierte aromatische Polyisocyanat ein Kondensationsprodukt von aromatischem Polyisocyanat, einem Isocyanatblockiermittel und einer organischen Verbindung umfasst, die eine andere als das Isocyanatblockiermittel ist und eine oder mehrere funktionelle Gruppen aufweist, die fähig sind, mit einem Isocyanat zu reagieren.

3. Wässrige Zusammensetzung nach Anspruch 2, wobei das Isocyanatblockiermittel aus der Gruppe ausgewählt ist, die aus Arylalkoholen und C₂- bis C₈-Alkanonoximen besteht.

4. Wässrige Zusammensetzung nach einem von Anspruch 2 oder 3, wobei die organische Verbindung eine oder zwei funktionelle Gruppen aufweist, die fähig sind, mit einem Isocyanat zu reagieren, und wobei die funktionellen Gruppen aus einer Hydroxylgruppe, einer Aminogruppe und einer Thiolgruppe ausgewählt sind.

5. Wässrige Zusammensetzung nach Anspruch 4, wobei die organische Verbindung eine Wasserlöslichkeit vermittelnde Gruppe umfasst, die aus der Gruppe ausgewählt ist, die aus Polyoxyalkylengruppen, Gruppen, die fähig sind, in einem wässrigen Medium eine ionische Gruppe zu bilden, und ionischen Gruppen besteht.

6. Wässrige Zusammensetzung nach Anspruch 1, wobei das Reaktionsprodukt das Reaktionsprodukt eines aliphatischen Polyisocyanats und einer organischen Verbindung mit einer oder zwei funktionellen Gruppen ist, die aus der Gruppe ausgewählt sind, die aus einer Hydroxylgruppe, einer Aminogruppe und einer Thiolgruppe besteht.

7. Wässrige Zusammensetzung nach Anspruch 6, wobei die organische Verbindung eine Wasserlöslichkeit vermittelnde Gruppe umfasst, die aus der Gruppe ausgewählt ist, die aus Polyoxyalkylengruppen, Gruppen, die fähig sind, in einem wässrigen Medium eine ionische Gruppe zu bilden, und ionischen Gruppen besteht.

8. Wässrige Zusammensetzung nach Anspruch 1, wobei Komponente (a) zu einem Anteil zwischen 0,5 Gew.% und 10 Gew.% gegenwärtig ist, Komponente (b) zu einem Anteil zwischen 0,5 Gew.% und 10 Gew.% gegenwärtig ist und Komponente (c) zu einem Anteil zwischen 0,05 Gew.% und 2 Gew.% gegenwärtig ist.

9. Wässrige Zusammensetzung nach Anspruch 1, ferner umfassend einen Emulgator.

10. Verfahren zum Behandeln eines Faserstoffsubstrates, umfassend den Schritt des Auftragens einer Zusammensetzung nach Anspruch 1 auf ein Faserstoffsubstrat.

11. Verfahren nach Anspruch 10, wobei das Faserstoffsubstrat Naturfasern umfasst.

12. Verfahren nach einem von Anspruch 10 oder 11, wobei das Faserstoffsubstrat Webstoff ist.

13. Verfahren nach einem der Ansprüche 10 bis 12, wobei das Faserstoffsubstrat einer Wärmebehandlung zwischen 110 und 190 °C unterworfen wird, um das Aushärten der Zusammensetzung zu bewirken.

14. Verfahren nach einem der Ansprüche 10 bis 13, wobei die Zusammensetzung zu einem Anteil aufgetragen wird, um auf dem Faserstoffsubstrat, bezogen auf das Gewicht des Faserstoffsubstrates, einen Anteil an Feststoffen von 0,3 bis 5 Gew.% zu ergeben.

15. Faserstoffsubstrat, das mit einer Zusammensetzung nach Anspruch 1 behandelt wurde.

16. Faserstoffsubstrat nach Anspruch 15, wobei das Faserstoffsubstrat Naturfasern umfasst.

17. Faserstoffsubstrat nach Anspruch 15, wobei das Faserstoffsubstrat Webstoff ist.

## Revendications

1. Composition aqueuse comprenant :
(a) une mélamine qui est au moins partiellement dérivée avec un groupe hydrocarbure aliphatique comportant au moins 8 atomes de carbone ;
(b) une cire ; et
(c) au moins un composant sélectionné dans le groupe constitué de : (i) un produit réactionnel d'un polyisocyanate aliphatique et d'un composé organique comportant un ou plusieurs groupes capables de réagir avec un isocyanate, ledit produit réactionnel comportant des groupes isocyanate libres et ayant une masse moléculaire d'au moins 350 g/mol et (ii) un polyisocyanate aromatique bloqué ;
et dans laquelle la composition est fondamentalement exempte de composés fluorochimiques.

2. Composition aqueuse selon la revendication 1, dans laquelle ledit polyisocyanate aromatique bloqué comprend un produit de condensation d'un polyisocyanate aromatique, un agent de blocage des isocyanates et un composé organique autre que ledit agent de blocage des isocyanates qui comporte un ou plusieurs groupes fonctionnels capables de réagir avec un isocyanate.

3. Composition aqueuse selon la revendication 2, dans laquelle ledit agent de blocage des isocyanates est sélectionné dans le groupe constitué d'alcools aryliques et d'alcanone oximes en C₂ à C₈.

4. Composition aqueuse selon la revendication 2 ou la revendication 3, dans laquelle ledit composé organique comporte un ou deux groupes fonctionnels capables de réagir avec un isocyanate et dans laquelle lesdits groupes fonctionnels sont sélectionnés parmi un groupe hydroxy, un groupe amino et un groupe thiol.

5. Composition aqueuse selon la revendication 4, dans laquelle ledit composé organique comprend un groupe hydrosolubilisant sélectionné dans le groupe constitué de groupes polyoxyalkylène, de groupes capables de former un groupe ionique dans un milieu aqueux, et de groupes ioniques.

6. Composition aqueuse selon la revendication 1, dans laquelle ledit produit réactionnel est le produit réactionnel d'un polyisocyanate aliphatique et d'un composé organique comportant un ou deux groupes fonctionnels sélectionnés dans le groupe constitué d'un groupe hydroxy, d'un groupe amino et d'un groupe thiol.

7. Composition aqueuse selon la revendication 6, dans laquelle ledit composé organique comprend un groupe hydrosolubilisant sélectionné dans le groupe constitué de groupes polyoxyalkylène, de groupes capables de former un groupe ionique dans un milieu aqueux, et de groupes ioniques.

8. Composition aqueuse selon la revendication 1, dans laquelle le composant (a) est présent dans une quantité entre 0,5 % en poids et 10 % en poids, le composant (b) est présent dans une quantité entre 0,5 % en poids et 10 % en poids, et le composant (c) est présent dans une quantité entre 0,05 % en poids et 2 % en poids.

9. Composition aqueuse selon la revendication 1, comprenant en outre un émulsifiant.

10. Méthode de traitement d'un substrat fibreux comprenant l'étape d'application d'une composition selon la revendication 1 sur un substrat fibreux.

11. Méthode selon la revendication 10, dans laquelle ledit substrat fibreux comprend des fibres naturelles.

12. Méthode selon la revendication 10 ou la revendication 11, dans laquelle ledit substrat fibreux est un textile.

13. Méthode selon l'une quelconque des revendications 10 à 12, dans laquelle ledit substrat fibreux est soumis à un traitement thermique entre 110 et 190 °C pour produire un durcissement de ladite composition.

14. Méthode selon l'une quelconque des revendications 10 à 13, dans laquelle ladite composition est appliquée dans une quantité étudiée pour produire une quantité de solides de 0,3 à 5 % en poids sur ledit substrat fibreux, ce pourcentage étant exprimé par rapport au poids dudit substrat fibreux.

15. Substrat fibreux ayant été traité avec une composition selon la revendication 1.

16. Substrat fibreux selon la revendication 15, dans lequel ledit substrat fibreux comprend des fibres naturelles.

17. Substrat fibreux selon la revendication 15, dans lequel ledit substrat fibreux est un textile.
